(19) **Europäisches Patentamt / European Patent Office / Office européen des brevets**

(11) **EP 1 859 686 A1**

(12) **EUROPEAN PATENT APPLICATION**

(43) Date of publication:
**28.11.2007 Bulletin 2007/48**

(51) Int Cl.:
**A23G 1/18** (2006.01) **A23G 1/00** (2006.01)

(21) Application number: **06114338.4**

(22) Date of filing: **22.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: PURATOS N.V.
**1702 Groot-Bijgaarden (BE)**

(72) Inventors:
• **Descamps, Pierre**
**7830, SILLY (BE)**
• **Kegelaers, Yves**
**1200, BRUSSELS (BE)**

(74) Representative: **pronovem**
**Office Van Malderen**
**Avenue Josse Goffin 158**
**1082 Bruxelles (BE)**

(54) **Method to crystallize real chocolate in the form of stable Beta V polymorphic crystals**

(57) The present invention relates to a method to pre-crystallize real chocolate in the form of Beta V crystals, said method comprising the steps of
- determining an initial temperature (TCi) for a chocolate mass to have before seed crystals are admixed thereto, said TCi exceeding the critical temperature,
- obtaining a liquid chocolate mass by melting it to the initial temperature (TCi),
- dispersing into said liquid chocolate mass at the initial temperature (TCi), solid crystal seeds consisting of at least one ingredient selected from the group consisting of cocoa butter, a cocoa butter equivalent and/or real chocolate, wherein the crystal seeds contain a dominating amount of stable Beta V crystals,
- mixing the chocolate mass and the crystal seeds until the seeds are almost completely melted,
- cooling down the thus obtained mixture, that is continuously stirred, to a pre-crystallization temperature (Tpc), said cooling being achieved through the admixing of the crystal seeds and through heat exchange with the environment to form a pre-crystallized chocolate, and
- optionally maintaining the thus obtained mixture at the pre-crystallization temperature to maintain the chocolate mass in a pre-crystallized state.

The present invention further relates to methods and means to determine the TCi needed to reach the pre-crystallization temperature within an acceptable time (e.g. less than 6 minutes).

EP 1 859 686 A1

**Description**

**Field of the invention**

The invention relates to a rapid and simple method for crystallizing real chocolate in the form of stable Beta V polymorph crystals by dispersing seed crystals into a liquid chocolate mass. The invention further relates to a method and system for predicting the optimal temperature of the chocolate at admixing and for predicting the time needed to reach the pre-crystallization temperature.

**Background**

Cocoa butter, a major component of chocolate, is a polymorphic product. The fats in cocoa butter can crystallize in six different forms (polymorphous crystallization). Making good chocolate is about forming the most of the type V crystals (Beta V form). Tempering is therefore an important step in the production of chocolate and chocolate products.

Pre-crystallization of chocolate serves to initialize the crystallization of part of the fat of a chocolate mass into polymorphic forms V and VI (when using the terminology of Wille and Lutton), also called polymorphic forms Beta 2 and Beta 1 (when using the terminology of Larsson). Polymorphic forms V or Beta 2 are further referred to as Beta V crystal forms.

Chocolate users (chocolatiers) should pre-crystallize the chocolate mass before using it. Pre-crystallization is part of a tempering process. Tempering is the process of inducing satisfactory crystal nucleation of the liquid fat in chocolate so that the chocolate forms stable Beta V crystals. The stable crystals function as seeds during further cooling. The liquid chocolate crystallizes around these seeds in the right form.

It is however difficult to obtain Beta V crystals by simply cooling chocolate. Tempering is therefore required.

Tempering is typically a thermal process , and involves melting the fat by heating the chocolate mass to typically about 40-50 °C and then slowly cooling it with constant stirring to about 25°C-27°C to form nuclei for fat crystal growth (id est to initialize fat crystallization). Then, the chocolate mass is typically reheated about 0.5°C-4.0°C with the aim of melting most of the unstable crystals, and of preserving the content of Beta V crystals, which melt at higher temperature than unstable crystals. An amount of about 0.1%-5% of stable crystals is typically preserved in the mass ready for depositing and further use.

To obtain pre-crystallized chocolate, the chocolate mass is typically cooled and scraped on a marble at room temperature of about 18°C-20°C, or on a cooled scraped surface of a heat exchanging device.

Disadvantages of these classical methods are amongst others the cost of materials and equipments needed to guide and control the temperature, the labor and necessary knowledge (skills) of the user.

In addition to that, with the traditional tempering processes, besides the highly desirable stable Beta V crystals, unavoidably a content of more or less instable crystals is created such as the Alpha ($\alpha$) and Beta IV crystals.

Recently, attempts have been made for securing a content of only the desirable type of crystals in the mass simply by adding a content of seeding crystals in powder-form into a liquid, temperature controlled chocolate mass.

Such a method is for instance known from DE 10118354 (Sollich). In DE 10118354 thermally treated seed crystals in powder-form are suspended into a branched off chocolate stream in a mixer and then supplied to a mixing stage at the end of a tempering machine, i.e. at a position after the cooling stages. This means that in a first step, the mass is cooled down to a temperature (T) below 37°C, so that at least the desirable high melting stable Beta V crystals survive, before adding of the seed crystals.

Another such method is described in WO 01/06863 whereby seed material consisting of a cooled mixture at a temperature above 30°C is added to a pre-cooled chocolate mass.

A disadvantage of such methods is that the chocolate mass has to be pre-cooled, which requires an expensive device and means a loss of energy.

All references cited above are incorporated by reference herein.

**Aims of the invention**

It is an aim of the present invention to provide a method and means for the rapid and easy (pre-)crystallization of chocolate into the highly desired stable Beta V crystals.

It is an aim of the present invention to provide a method that does not have the drawbacks of the prior art.

It is a further aim of the invention to provide a method to pre-crystallize at least a part of the fat contained in a chocolate mass so that the final product, the solidified chocolate, will develop no or only a slight amount of white efflorescences (fat bloom) upon prolonged storage.

## Description of the figures

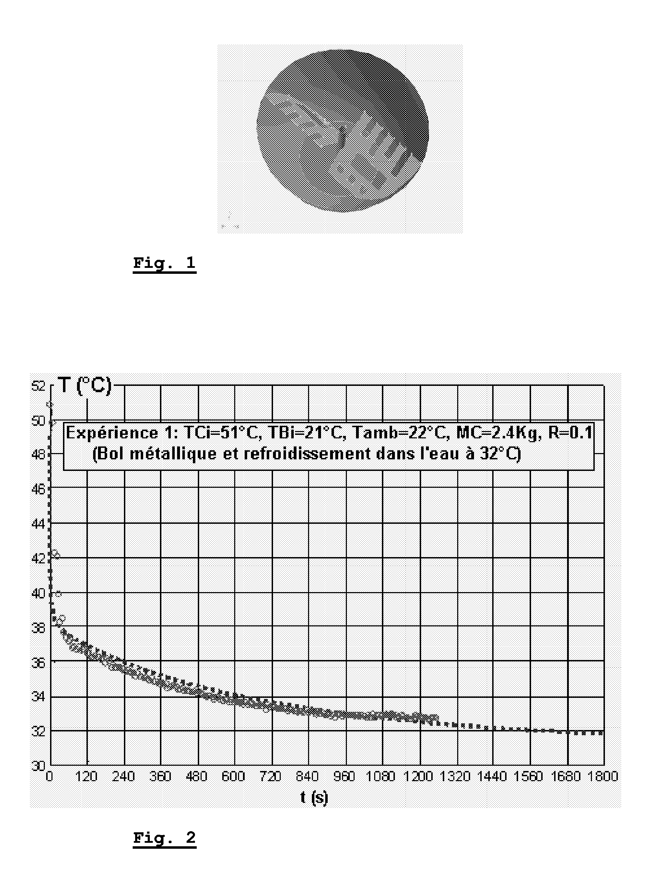

Figure 1 shows the mixer used in the modeling system to mimic a manual mixing or stirring by the chocolate user. During the experiments, the mixer had a rotation velocity of 32 rpm (laminar flow conditions).

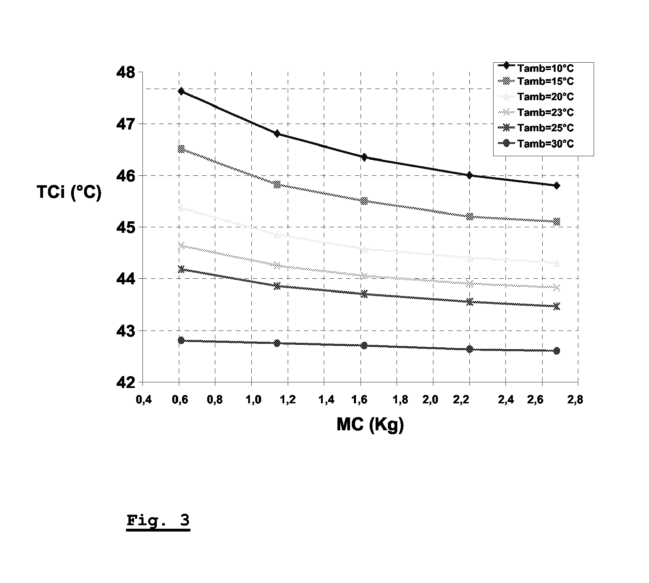

Figure 2 shows the evolution of the temperature (°C) of the chocolate mass to which crystal seeds (10% w/w) were added in function of the time (seconds). Small filled squares (longest curve): modeling results; empty circles (curve stopping at about 1250 seconds): experimental data. TCi: 51°C, TBi: 21°C, Tamb: 22°C, MC: 2.4 kg, R=0.1, recipient: metal bowl, and cooling in a water bath at 32°C (au bain marie).

Figure 3 shows the preferred (optimal) temperature of the chocolate TCi at t=0 (the time of adding the crystal seeds) in function of the volume of the chocolate treated (MC) and this for different ambient temperatures (Tamb). After adding 10 % (w/w) of CB pieces with a TBi = Tamb, a chocolate temperature (TC) of between about 33°C and about 33.2 °C is reached after 5 minutes, and a TC of below about 33 °C after 6 minutes. The recipient containing the chocolate mass is a plastic bowl that is hemi-spherical in form (radius = 24 cm). Curves (from upper to lower): Tamb of 10, 15, 20, 23, 25 and 30°C respectively.

## Summary of the invention

The present invention relates to a rapid and simple method to pre-crystallize a chocolate mass (a real chocolate mass) without any cooling devices such as tempering machines.

The present invention provides for a method to pre-crystallize real chocolate in the form of Beta V crystals, said method comprising the steps of

- determining an initial temperature (TCi) for a chocolate mass (to have) before seed crystals are admixed thereto, said TCi exceeding its critical temperature,
- obtaining a liquid chocolate mass by melting it to the initial temperature (TCi),
- dispersing into said liquid chocolate mass at the initial temperature (TCi) solid crystal seeds consisting of at least one ingredient selected from the group consisting of cocoa butter, a cocoa butter equivalent and/or real chocolate, wherein the crystal seeds contain a dominating amount of stable Beta V crystals,
- mixing the chocolate mass and the crystal seeds until the seeds are melting which means that these seeds are completely melted or almost completely melted and may let a small amount (advantageously between about 10% and about 0.1%, preferably between about 5% and about 0.5% (w/w)) of crystals not melted and are maintained as seeds.
- cooling down the thus obtained mixture that is continuously stirred to a pre-crystallization temperature (Tpc), said cooling being achieved through the admixing of the crystal seeds and through heat exchange with the environment to obtain a pre-crystallized chocolate, and
- Optionally maintaining the thus obtained mixture at the pre-crystallization temperature to maintain the chocolate mass in a pre-crystallized state.

The desired initial temperature of the chocolate mass (TCi) can be determined experimentally or can be predicted trough modeling.

This temperature TCi varies in function of (a) the type of chocolate, (b) the amount (mass) of chocolate treated, (c) the amount (mass) of crystal seeds added, (d) the temperature of those crystal seeds at admixing, (e) the material (most often plastic or inox) of which the container (or recipient) is made in which the mixture is cooled, (f) the form or geometry of the container (most often a hemispheric bowl with a given diameter), and (g) the environment in which the container is placed to allow cooling (e.g. ambiant air or a thermostatic water bath at e.g. 32 °C).

The optimal TCi is advantageously determined by modeling the variation of internal energy or heat exchange in the system.

The chocolate mass that is treated preferably is a real chocolate mass prepared by admixing dark chocolate, milk chocolate, household chocolate and/or white chocolate.

Advantageously, the crystal seeds of the invention (also referred to as cocoa butter pieces or CB pieces) have an initial temperature equal to or close to the ambient temperature (Tamb). Preferably the CB pieces have a TBi of between about 18 and 25 °C, more preferably of between 19 and 21 °C.

The adding of the crystal seeds or CB pieces to the liquid chocolate mass advantageously serves two purposes: they are a cooling source and help initiate crystallization of the chocolate in the right form (Beta V form). Advantageously no cooling equipments are needed. The recipient in which the mixture (of the chocolate and the CB pieces) is cooling down may be left to the air or may be placed in a thermostatic bath of e.g. 32 °C.

The addition of CB pieces accelerates the cooling of the chocolate to be tempered. As melting is an endothermic process, there is an initial rapid drop in temperature after dispersion of the CB pieces into the liquid chocolate mass.

The melting of the CB pieces (e.g. pastilles) slows down as the temperature of the chocolate lowers.

Advantageously CB pieces are spherical or hemi-spherical in form. Their diameter may vary between about 20 and about 2 mm, yet preferably they have a diameter of between about 10 and about 5 mm. Other forms of CB pieces may be used, yet beads or (hemi-)spherical particles are most practical for many reasons. A powder may be used yet this may cake.

Preferably between about 1% and about 20% (w/w) seed crystals or CB pieces are dispersed into the liquid chocolate mass.

Most preferably about 10% (w/w) of seed crystals are dispersed into the liquid chocolate mass.

Preferably the initial temperature of the chocolate mass before adding the crystals seeds (TCi) is (then) more than 1°C above the critical temperature. And preferably the pre-crystallization temperature is (then) about 0.5 °C to about 2°C below the critical temperature. Advantageously the pre-crystallization temperature is below 37°C, preferably between about 30°C and about 35°C, more preferably between about 31°C and about 33.5°C, most preferably between about 33 °C and about 33.2 °C.

Advantageously the initial temperature TCi of the chocolate mass is chosen (determined) such that a pre-crystallization temperature of below 37°C, preferably of between about 30°C and about 35°C, more preferably of between about 31°C and about 33°C, most preferably of between about 33.5 °C and about 33.2 °C is reached within about 1 to about 10 minutes, more preferably within about 3 to about 6 minutes. Alternatively, the time needed to reach a pre-crystallization temperature like the above is determined experimentally or is predicted (through modeling).

The pre-crystallization temperature should preserve the crystal seeds initialized by the partial melting of the CB pieces.

After pre-crystallization the chocolate is typically poured into a mould and put into a refrigerator where it further crystallizes. Chocolate as such tempered may be used amongst others for the making of chocolate bars, pralines, ganaches etc.

The invention further relates to a computer system for modeling temperature changes in a chocolate mass, said system comprising the coding means adapted to model temperature changes in a liquid chocolate mass to which solid crystal seeds containing a dominating amount of stable crystals are admixed, and this in function of the time, said system further comprising the means to determine the time needed to reach the pre-crystallization temperature, and the means to determine on the basis thereof the preferred initial temperature (TCi) of the chocolate mass so that the pre-crystallization temperature can be reached in an acceptable time (e.g. within less than 6 minutes).

Advantageously the model takes into account the following parameters: (a) the type of chocolate, (b) the amount of chocolate treated, (c) the amount of crystal seeds added, (d) the temperature of those crystal seeds at admixing, (e) the material of which the container or recipient is made in which the mixture is cooled, (f) the form or geometry of this container, and (g) the environment in which the container is placed to allow cooling.

## Detailed description of the invention

The invention provides for a novel method to (pre-)crystallize a chocolate mass such as a real chocolate mass in the right form (Beta V form).

The method of the invention consists of adding to a liquid chocolate mass CB pieces crystallized in the right form, the Beta V form. The crystal seeds are added to chocolate having an initial temperature TCi.

The TCi is chosen such that when the chocolate reaches a temperature of about 30°C-33°C, the temperature at which stable Beta V crystals are formed, also referred to as the pre-crystallization temperature, some CB pieces (crystallized in the Beta V form) will remain that have not melted and that can seed the chocolate mass. These remaining seeds allow the initiation of crystallization in the right form.

During tempering the mixture of chocolate and CB pieces is manually stirred and allowed to cool in the air, or more rarely in a thermostatic (water) bath (at about 32 °C) .

The method of the invention in fact involves only two short steps: (1) the melting of a chocolate mass to a temperature TCi, which exceeds the melting temperature of type VI crystals, in order to melt all six polymorphic crystal forms, and (2) cooling the chocolate to the crystallization point of Beta V crystals (about 30-33 °C) by adding crystal seeds to the liquid chocolate mass and subsequently through heat exchange with the environment (or surroundings). The addition of solid crystal seeds to a liquid chocolate mass significantly accelerates cooling of the chocolate mass.

The method of the invention has several advantages compared to techniques known in the art.

The method of the invention does not require special skills from the user. Further, no special or expensive equipments are needed to control and guide the cooling and tempering of a chocolate mass.

With the method of the invention, the pre-crystallization temperature is reached relatively fast, e.g. within 6 minutes. In classical tempering methods this takes in general about 20 minutes.

Yet a further advantage of the method of the invention is that the desired TCi of the liquid chocolate mass is the same for all types of chocolate (dark, milk, white, household), whereas classical methods require an adaptation of the temperature according to the type of chocolate.

The method of the invention is thus more simple and faster than methods existing in the art to pre-crystallize a real chocolate mass.

By a « real chocolate « is meant a chocolate that requires tempering such as dark chocolate, milk chocolate, household chocolate and/or white chocolate as described in the EC directive 2000/36/EC of the European parliament and the council, which relates to cocoa and chocolate products intended for human consumption (directive of 23 June 2000, incorporated by reference herein). Cocoa butter may be replaced in these chocolates by more than 5% of cocoa butter equivalents.

Cocoa butter equivalents are defined as fat compositions having a solid fat content measured at 30°C with IUPAC method 2.150 a, the fat composition not being subjected to a thermal treatment, that differs at least 8% absolute from the solid fat content measured at the same temperature with IUPAC method 2.150b, the fat composition this time being subjected to a thermal treatment program described in that method.

The CB pieces (the crystal seeds) are admixed to or dispersed into the chocolate mass by simple techniques such as manual mixing with a supple spatula or mixing with the help of a mixer of e.g. the type Hobart. The mixing will assure the complete or almost complete melting of the CB pieces.
However, a small amount of crystals are maintained in the chocolate mass as seeds.

These CB pieces will seed the chocolate mass and assure its pre-crystallization.

The crystal seeds or CB pieces according to the invention consist of one or more components or ingredients selected from the list of cocoa butter, cacao butter equivalents and/or real chocolate as defined in the EC directive 2000/36/EC of 23 June 2000 (see above).

The CB pieces should contain a dominating amount of stable crystals such as the Beta V crystals. Methods to achieve such dominating amount of stable crystals are known in the art. EP 1 425 975 describes one way of obtaining such dominating amount of stable crystals. By a "dominating amount" is meant more than 50%, preferably more tan 70%, most preferably more than 90 %. EP 0 765 606 describes how chocolate mass from a vessel may be subjected to ultrasonic treatment in order to form stable Beta V polymorph crystals. Both references are incorporated by reference herein. CB pieces having a dominant amount of stable crystals are available on the market.

In the present invention the CB pieces are dispersed into a chocolate mass heated to above the melting temperature of type VI crystals. The initial temperature of the chocolate (t° at admixing or seeding, or TCi) exceeds the critical temperature, preferably by at least 1°C, more preferably by at least 2 °C, most preferably by at least 4 °C.

In the present application the critical temperature is the temperature at which all forms of crystalline fat have changed into a molten state. This temperature may be determined by melting a sample (of the chocolate mass) whose fat is in the Beta ($\beta$) condition (obtained for example by leaving molten chocolate for at least three days at a temperature of about 22°C) and to heat it to a temperature X and to maintain it to for one minute at that temperature X. The mass is subsequently cooled to about 23°C at a rate of about 1°C/min. (while avoiding that the liquid chocolate mass comes into contact with a surface whose temperature is more than about 3°C lower than that of the chocolate mass), and examined to see whether the Beta ($\beta$) or $\beta'$ phase develops. This experiment is carried out mechano-statically.

That temperature X is the critical temperature (Tc) with which after cooling again solid chocolate is obtained whose crystallization phase is substantially $\beta'$.

The melting point of chocolate depends to some extent on the rate of cooling during production. Moreover the melting point is not one single value, because chocolate has a melting range of several degrees (WO 01/06863).

It was found that the pre-crystallization temperature (Tpc) to which the mixture of chocolate and CB pieces is cooled down should be about 0.5° to about 2°C below the (thus determined) critical temperature (X) of the chocolate mass, at least in the case of adding about 10% w/w of CB pieces.

It was further found that the initial temperature (TCi) of the chocolate mass before adding of the CB pieces should exceed the critical temperature (X) by at least 1°C.

The temperature TCi varies in function of the container used, the chocolate used, the temperature, amount and properties of the CB pieces, the cooling environment. More specifically, the temperature TCi varies in function of the geometrical form of the vessel (also referred to as the container or recipient), the thermal properties of the vessel like the emission ($\varepsilon$) and the exchange of the external surface (wall) and free surface with the ambient air (hex), the quantity of the chocolate mass (MC), the specific heat of the chocolate (Cp), the thermal conductivity of the chocolate (k), the quantity or amount of CB pieces added (MB), the melting kinetics of these CB pieces (da/dt), the latent heat of these CB pieces ($l_f$), the initial temperature of these CB pieces (TBi), the thermal properties of the environment (k of air (e.g. in the case of plastic container) or water (e.g. in the case of an inox container placed in a thermostatic water bath)) and the temperature of the environment (Tamb).

The invention will be described in further details in the following examples by reference to the enclosed drawings, which are not in any way intended to limit the scope of the invention as claimed.

**Examples**

**Example 1: Modeling the heat balance**

In this particular example the optimal TCi was determined through modeling using the FLUENT® Flow Modeling Software. Other suitable software systems exist and are available to the person skilled in the art.

The model serves to reproduce the evolution of the temperature of the chocolate during tempering. To achieve this, one has to start from physical phenomena translated into mathematical formulas.

The energy balance calculated for a portion of the volume (in the x direction in Cartesian coordinates) containing a uniform repartition of the CB pieces in the chocolate mass can be written as:

$$(\rho\, Cp)_m\, \partial T/\partial t = k\, \partial^2 T/\partial x^2 - (\rho\, Cp)_m\, U_x\, \partial T/\partial x - Q_f \qquad \text{[formula I]}$$

wherein $(\rho\, Cp)_m\, \partial T/\partial t$ is the total variation of internal energy in the *system*; $k\, \partial^2 T/\partial x^2$ is the variation of internal energy through conduction; $(\rho\, Cp)_m\, U_x\, \partial T/\partial x$ the variation of internal energy by convection due to agitation; and $Q_f$ the shaft item, said shaft item standing for the heat consumed by the melting of the CB pieces in the liquid chocolate mass and wherein

- $\rho$ is the specific weight (m/V) of the mixture of chocolate and CB pieces,
- T is the temperature of this mixture,
- t is the time from adding of the CB pieces,
- Cp is the specific heat of the chocolate,
- x is the distance from the vector's origin in the centre of the vessel,
- Ux is the fluid velocity at a point in the x direction,
- k is the thermal conductivity
- m is the mass of the system chocolate + CB pieces.

The losses by convection with the outside (surrounding environment) can be calculated with the law of Newton:

$$Q_c = U_{ex}\, A_{system}\, (\overline{T}_{system} - T_{amb})\qquad \text{[formula II]}$$

wherein

- $U_{ex}$ is the global coefficient of heat transfer with the outside

- $A_{system}$ is the exchange surface of the system.

- $\overline{T}_{system}$ is the mean temperature of the system

- $T_{amb}$ is the ambient temperature.

During preliminary experiments it became clear that the convection term is sufficiently small to allow the modeling of a manual stirring by introducing an effective thermal conductivity coefficient.

This approach consists in integrating in a single coefficient the action of conduction and convection in the heat exchange balance [formula I]. One considers that convection loss can be expressed as a function proportional to the temperature gradient [see formula II]. This assumption simplifies considerably the numerical simulation.

The aim of this approach is to adjust the thermal conductibility k to a value superior to the real thermal conductivity. If the effective thermal conductivity coefficient, $k_{eff}$, is adjusted to a value above the reel thermal conductivity, the amplification of heat transfers created by the movement of convection induced in a stirred system is taken in consideration.

The evolution of the temperature in the recipient (containing chocolate mass and CB pieces) can thus be rewritten as:

$$(\rho\, Cp)_m\, \partial T/\partial t = k_{eff}\Delta T - Qf \qquad \text{[formula III]}$$

The initial conditions and the conditions at the limits can be calculated as follows: Conditions at limits, at free surface and at the walls of the recipient, take into account a heat transfer term by convection and a heat transfer term by radiation with the environment. The radiation term is function of the emissivity $\varepsilon$ of the material of the container used: emissivity $\varepsilon$ depends on the nature of the emitting surface (in this case the external wall of the recipient).

The chocolate user typically uses a recipient or container made of plastic or inox. The values of $\varepsilon_{inox}$ and $\varepsilon_{plastic}$ can be found in the literature: $\varepsilon_{inox} = 0.21$ and $\varepsilon_{plastic} = 0.93$.

When working in air (e.g. in the case a plastic recipient is used) a value for $h_{wall}$ of 4 $W/m^2K$ at the wall of the recipient (most often a bowl) and a value for $h_{free}$ surface of 6.8 $W/m^2K$ were used as they were find satisfying. When working au bain marie (e.g. when using an inox bowl placed in a water bath of e.g. 32°C), the following values were taken: $h_{wall} = 125$ $W/m^2K$ and $h_{free}$ surface = 6.8 $W/m^2K$.

When working in air, $T_\infty = T_{amb}$ whereas in water $T_\infty =$ the water temperature and $T_{amb}$ the temperature of the ambient air.

The shaft item $Q_f$, regroups the heat consumed during the melting but also takes into account the heating of CB pieces in the solid state and subsequently in the liquid state.

If $\alpha$ is the liquid cocoa butter fraction at a given moment during the melting process, then we get:

$$
\begin{array}{ccc}
B_{sol} & \rightarrow & B_{liq} \\[1em]
t=0 \quad \rho_0 = \dfrac{M_{B0}}{V_t} & & 0 \\[1.5em]
t>0 \quad \rho = \dfrac{M_B}{V_t} & & \rho_0 - \rho = \dfrac{M_{B0} - M_B}{V_t} \\[1.5em]
(1-\alpha) = \dfrac{\rho}{\rho_0} & & \alpha = \dfrac{\rho_0 - \rho}{\rho_0}
\end{array}
$$

wherein $V_t = V_{Chocolate} + V_{CB\ pieces}$, $M_{B0}$ and $M_B$ are respectively the total volume (of the chocolate mass + the CB pieces), the initial mass and the mass at a given moment of the solid CB pieces. Rho ($\rho$, $Kg/m^3$) is herein the ratio between the instantaneous mass of the solid CB pieces and the total volume $V_t$.

The melting velocity of the CB pieces can then be calculated as follows:

$$\frac{d\alpha}{dt} = A_0 \exp\left(-\frac{E_a}{RT}\right)(1-\alpha)^n \qquad \text{[formula IV]}$$

wherein $A_0 (s^{-1})$ is the pre-exponential factor, $E_a\ (kJ/mol)$ is the energy of activation, $R (kJ/mol)$ the gas constant, $T(K)$ the absolute temperature and n the reaction order. This is an empirical formula based on DSC analyses.

The shaft item in the energy equation is defined as:

$$Q_f = \text{[the heat requested for heating the solid and liquid CB pieces]} + \text{[[melting kinetics]} \times \text{[latent melting heat]]}.$$

For the melting kinetics, see formula IV.

If R is the ratio of the mass of the CB pieces ($M_B$) over the mass of the chocolate ($M_c$) and $l_f$ is the latent melting heat of CB pieces (for cocoa butter an $l_f$ of 157 000 J/kg is found in literature); and if we assume that the heat used to heat the solid, next liquid CB pieces (e.g. cocoa butter) is negligible, then the heat balance can be written as:

$$\left(M_c C_c + M_B C_B\right)\Delta T = \ell_f M_B + M_B C_{B_s}\left(T_f - T_{Bi}\right) + M_B C_{B_{liq}}\left(T_c - T_f\right) \qquad \text{[formula V]}$$

from which we derive that:

$$\Delta H_f = \frac{\left(C_c + R C_B\right)\Delta T}{R}; \quad avec \quad R = \frac{M_B}{M_c} \qquad \text{[formula VI]}$$

This mathematical model was introduced in the FLUENT® Flow Modeling Software.

**Example 3: validation of the mathematical model**

The above mathematical model was validated against experimental data.

A bowl with a volume of 1.8 1, with a lower diameter of 10.74 cm and an external diameter of 24.4 cm was used as recipient containing the chocolate mass and the CB pieces. This is a typical example of a recipient used in the art by the chocolate user. A plastic recipient was used for working in air and an inox recipient for working in water (a water bath).

The temperature was measured via thermocouples of the T type. The thermocouples were connected to a data logger having 8 channels and registering the temperature every second. The precision of the thermocouples was $\pm$ 0.2°C.

A first thermocouple was placed relatively far from the chocolate surfaces and was measuring the ambient temperature. A second thermocouple measured the temperature of the water bath (in case of a cooling au bain marie). Two thermocouples were submersed into the chocolate mass, at the same depth but at different radial positions. The temperature of the chocolate in each case was determined close to the surface near the extremity of the bowl where the temperature gradient is the highest.

During the tempering process, the chocolate is normally manually stirred to ensure a uniform suspension of the CB pieces (e.g. cocoa butter pastilles) in the chocolate mass. In order to reproduce such manual stirring, a mixer as shown in Figure 1 was used. This mixer is constructed in a way that the thermocouples can be submersed in the chocolate mass without hindering the periodical passing of the blades. In the experiments performed, the mixer was used at a rotation velocity of 32 rpm (condition of laminar flows), which mimics a manual stirring.

The accuracy of the model was tested amongst others for an experiment performed in water. In this experiment 10% (w/w) of cocoa butter pastilles, approximately semi-spherical in form, with a radius of about 2 cm, and of a transparent yellow color were added to a chocolate mass of 2.4 kg of chocolate (in this particular case dark chocolate) so that R = 0.1. The initial temperature TCi of the chocolate was 51°C, the initial temperature of the cocoa butter pastilles TBi was 21 °C, and the ambient temperature Tamb was 22°C. The recipient used was a metallic bowl that was cooled au bain marie.

Figure 2 shows that the mathematical model matches perfectly with the experimental data. The same can be done for experiments in air for different values of TCi, TBi, Tamb, MC, R etc. A nearly perfect match was obtained for ambient temperatures of between 20 and 25°C.

These curves further show that the admixing of the solid crystal seeds (the CB pieces) induces a very rapid decline in temperature of the mixture. This is caused by the melting of the CB pieces. According to the model, the drop in temperature continues until the concentration of CB pieces becomes O. Thereafter, cooling proceeds through heat exchange with the environment.

**Example 4: Determination of the optimal temperature TCi**

In the present example, the initial temperature of the CB pieces (same type as in Example 3) TBi was identical to the ambient temperature (Tamb). The recipient used was hemispheric in form with a radius of 24 cm and made from plastic. The vessel (recipient) was placed in ambient air. Data and predictions were generated for different ambient temperatures.

The modeling allows us to determine the TCi of a chocolate mass needed to reach a pre-crystallization temperature of between 31°C and 33°C 5 minutes after adding of the CB pieces to the chocolate mass.

The data generated can be presented in the form of a graph like Figure 3. From Figure 3, the chocolate user can easily derive the TCi a chocolate mass should have to reach the pre-crystallization temperature within a reasonable time (e.g. within less than 6 minutes). The lower the TBi, the higher the TCi.

The above shows that the method of the invention is easy, highly reproducible and fast. In the present example, in order to favor the cooling due to the melting of CB pieces and to limit the cooling due to conduction, the recipient or vessel containing the chocolate and CB pieces, was placed in ambient air. The above example demonstrates the applicability of the method of the invention under such working conditions.

However, for the same reasons, it is preferable to use a recipient or vessel made of plastic rather than metal (inox) to limit the loss via radiation.

Pre-crystallization is achieved when the temperature of the chocolate TC, 300 seconds after the addition of 10% of CB pieces to the chocolate mass, is below the critical temperature. Preferably X > TC > X - 2°C, wherein X is the critical temperature and TC the temperature of the chocolate at t = 300 seconds. After 300 seconds there should be no CB pieces visible with the naked eye.

After melting of the CB pieces and in order to maintain the chocolate mass in a pre-crystallized state, the recipient containing the seeded chocolate mass can be put in a caloporteur fluid kept at the pre-crystallization temperature $\pm$ 0.5 °C in a heating device.

## References

1. Wille, R.L. and Lutton, E.S. J. Am. Oil Chem. Soc., 43 (1966) 942.
2. Larsson, K. Acta Chem. Scand., 20 (1966), 2255-2260.

## Claims

1. A method to pre-crystallize real chocolate in the form of Beta V crystals, said method comprising the steps of

   - determining an initial temperature (TCi) for a chocolate mass to have before seed crystals are admixed thereto, said TCi exceeding the critical temperature,
   - obtaining a liquid chocolate mass by melting it to the initial temperature (TCi),
   - dispersing into said liquid chocolate mass at the initial temperature (TCi), solid crystal seeds consisting of at least one ingredient selected from the group consisting of cocoa butter, a cocoa butter equivalent and/or real chocolate, wherein the crystal seeds contain a dominating amount of stable Beta V crystals,
   - mixing the chocolate mass and the crystal seeds until the seeds are almost completely melted,
   - cooling down the thus obtained mixture, that is continuously stirred, to a pre-crystallization temperature (Tpc), said cooling being achieved through the admixing of the crystal seeds and through heat exchange with the environment to form a pre-crystallized chocolate, and
   - optionally maintaining the thus obtained mixture at the pre-crystallization temperature to maintain the chocolate mass in a pre-crystallized state.

2. The method of claim 1 wherein the initial temperature (TCi) is experimentally determined.

3. The method of claim 1 wherein the initial temperature (TCi) is being modeled.

4. The method of any of the preceding claims wherein the chocolate mass is prepared from dark chocolate, milk chocolate, household chocolate and/or white chocolate.

5. The method of any of the preceding claims wherein crystal seeds are spherical or hemi-spherical in form and have a diameter of about 2 to about 20 mm, preferably a diameter of about 10 to about 15 mm.

6. The method of any of the preceding claims wherein the crystal seeds admixed to the liquid chocolate mass have a temperature equal to or close to the ambient temperature.

7. The method of any of the preceding claims wherein between about 1% and about 20% (w/w) seed crystals are dispersed into the liquid chocolate mass.

8. The method of claim 7 wherein about 10% of seed crystals are dispersed into the liquid chocolate mass.

9. The method of claim 8 wherein the initial temperature (TCi) of the chocolate mass before adding the crystals seeds lies more than 1°C above the critical temperature.

10. The method of any of claims 8 to 9 wherein the pre-crystallization temperature (Tpc) is between about 0.5 °C and about 2°C below the critical temperature.

11. The method of any of the claims 8 to 10 the initial temperature (TCi) is chosen such that a pre-crystallization temperature (Tpc) of between about 30°C and about 35°C, more preferably of between about 31°C and about 33.5°C, most preferably of between about 33 °C and about 33.2 °C is reached within about 1 to about 10 minutes, preferably within about 3 to about 6 minutes.

12. A computer system for modeling temperature changes in a chocolate mass, said system comprising the coding means adapted to model temperature changes in a liquid chocolate mass to which solid crystal seeds containing a dominating amount of stable crystals are admixed, and this in function of the time, said system further comprising the means to determine the time needed to reach the pre-crystallization temperature of the chocolate mass, and the means to determine on the basis thereof the preferred initial temperature of the chocolate mass so that the pre-crystallization temperature can be reached between about 1 and about 10 minutes, preferably between about 3 and about 6 minutes.

13. The computer system of claim 12 wherein the model takes into account the following parameters: (a) the type of chocolate, (b) the amount of chocolate treated, (c) the amount of crystal seeds added, (d) the temperature of those crystal seeds at admixing, (e) the material of which the container is made in which the mixture is cooled, (f) the form or geometry of this container, and (g) the environment in which the container is placed to allow cooling.

**Fig. 1**

Expérience 1: TCi=51°C, TBi=21°C, Tamb=22°C, MC=2.4Kg, R=0.1
(Bol métallique et refroidissement dans l'eau à 32°C)

**Fig. 2**

Fig. 3

**European Patent Office**

## EUROPEAN SEARCH REPORT

Application Number

EP 06 11 4338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 391 356 B1 (WILLCOCKS NEIL A ET AL) 21 May 2002 (2002-05-21) * column 18, line 37 - line 54; claims; examples * | 1-11 | INV. A23G1/18 A23G1/00 |
| X | EP 0 521 205 A (UNILEVER PLC; UNILEVER N.V) 7 January 1993 (1993-01-07) * example I * | 1-11 | |
| A | US 2002/150668 A1 (RIDDERBUSCH GERHARD) 17 October 2002 (2002-10-17) * claims * | 1-11 | |
| A | EP 0 496 310 A (BATTELLE MEMORIAL INSTITUTE) 29 July 1992 (1992-07-29) * claims; examples * | 1-11 | |
| D,A | WO 01/06863 A (STICHTING VOOR DE TECHNISCHE WETENSCHAPPEN; VAN MALSSEN, KEES, FREDERI) 1 February 2001 (2001-02-01) * claims; examples * | 1-11 | TECHNICAL FIELDS SEARCHED (IPC)<br><br>A23G |
| X | DATABASE FSTA [Online] INTERNATIONAL FOOD INFORMATION SERVICE (IFIS), FRANKFURT-MAIN, DE; 1988, LAUT R: "Microprocessor controlled chocolate tempering and cooking." XP002404608 Database accession no. 88-1-04-k0003 * abstract * & MANUFACTURING CONFECTIONER, vol. 66, no. 6, 1986, page 129, | 12,13 | |
| X | EP 0 947 140 A1 (AASTED MIKROVERK APS [DK]) 6 October 1999 (1999-10-06) * paragraphs [0018], [0046] * | 12,13 | |

The present search report has been drawn up for all claims

| Place of search | Date of completion of the search | Examiner |
|---|---|---|
| Munich | 26 October 2006 | Vernier, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

Application Number

EP 06 11 4338

---

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent Office**

**LACK OF UNITY OF INVENTION
SHEET B**

The Search Division considers that the present European patent application does not comply with the
requirements of unity of invention and relates to several inventions or groups of inventions, namely:

    1. claims: 1-11

        Method of pre-crystallisation of chocolate in the form of
        beta crystals by addition of solid crystal seeds at a
        determined temperature, followed by cooling
                                ---

    2. claims: 12-13

        Computer system for modeling temperature changes in
        chocolate mass
                                ---

EP 1 859 686 A1

## ANNEX TO THE EUROPEAN SEARCH REPORT
## ON EUROPEAN PATENT APPLICATION NO.

EP 06 11 4338

26-10-2006

| Patent document cited in search report | | Publication date | Patent family member(s) | | Publication date |
|---|---|---|---|---|---|
| US 6391356 | B1 | 21-05-2002 | AT | 255818 T | 15-12-2003 |
| | | | AU | 735394 B2 | 05-07-2001 |
| | | | AU | 5819398 A | 03-08-1998 |
| | | | CA | 2277888 A1 | 16-07-1998 |
| | | | DE | 69820417 D1 | 22-01-2004 |
| | | | DE | 69820417 T2 | 30-09-2004 |
| | | | EP | 0964618 A2 | 22-12-1999 |
| | | | WO | 9830108 A2 | 16-07-1998 |
| EP 0521205 | A | 07-01-1993 | AT | 121593 T | 15-05-1995 |
| | | | DE | 69109281 D1 | 01-06-1995 |
| | | | DE | 69109281 T2 | 09-11-1995 |
| | | | JP | 6284864 A | 11-10-1994 |
| | | | US | 5342644 A | 30-08-1994 |
| US 2002150668 | A1 | 17-10-2002 | DE | 10118354 C1 | 18-07-2002 |
| | | | DE | 50204647 D1 | 01-12-2005 |
| | | | DK | 1249174 T3 | 27-02-2006 |
| | | | EP | 1249174 A2 | 16-10-2002 |
| EP 0496310 | A | 29-07-1992 | CA | 2059829 A1 | 26-07-1992 |
| | | | CH | 681846 A5 | 15-06-1993 |
| | | | IL | 100496 A | 30-03-1995 |
| | | | ZA | 9200513 A | 25-11-1992 |
| WO 0106863 | A | 01-02-2001 | AT | 269642 T | 15-07-2004 |
| | | | AU | 6322300 A | 13-02-2001 |
| | | | BR | 0013172 A | 02-04-2002 |
| | | | DE | 60011780 D1 | 29-07-2004 |
| | | | DE | 60011780 T2 | 14-07-2005 |
| | | | EP | 1204330 A1 | 15-05-2002 |
| | | | ES | 2223553 T3 | 01-03-2005 |
| | | | JP | 2003505054 T | 12-02-2003 |
| | | | NL | 1012691 C2 | 24-01-2001 |
| | | | PT | 1204330 T | 30-11-2004 |
| EP 0947140 | A1 | 06-10-1999 | DE | 69803748 D1 | 21-03-2002 |
| | | | DE | 69803748 T2 | 14-08-2002 |
| | | | JP | 2000060428 A | 29-02-2000 |
| | | | US | 6105489 A | 22-08-2000 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10118354, Sollich
- WO 0106863 A
- EP 1425975 A
- EP 0765606 A

**Non-patent literature cited in the description**

- **WILLE, R.L. ; LUTTON, E.S.** *J. Am. Oil Chem. Soc.,* 1966, vol. 43, 942
- **LARSSON, K.** *Acta Chem. Scand.,* 1966, vol. 20, 2255-2260